# EUROPEAN PATENT APPLICATION

(11) **EP 2 827 532 A1**
(43) Date of publication of application: **21.01.2015**
(21) Application number: 14173964.9
(22) Date of filing: 25.06.2014
(51) Int. Cl.: H04L 12/24, H04Q 3/00

(54) **Optical communication network configuration method**

(30) Priority: 18.07.2013 CN 201310302435
(71) Applicant: Sercomm Corporation, Taipei 115 (TW)
(72) Inventor: Shen, Yu-Li, 115 Taipei (TW); Gu, Hai-Rong, 215021 Suzhou Industrial Park (CN); Hao, Chuan-Yu, 215021 Suzhou Industrial Park (CN)
(74) Representative: Von Kreisler Selting Werner - Partnerschaft von Patentanwälten und Rechtsanwälten mbB

(57) **Abstract**

An optical communication network configuration method for creating a link between an optical network unit (ONU) and an optical line terminal (OLT) is provided. The configuration method comprises following steps. The ONU submits a universal management information base (universal MIB) to the OLT. The universal MIB is pre-stored in the ONU, and is compatible with various different OLT models. The ONU receives a set of configuration parameters from the OLT and recognizes the type of the OLT accordingly. The ONU selects a management information base (MIB) matching the OLT according to the recognized type of OLT. The ONU uses the MIB matching the OLT to create an ONU management and control interface (OMCI) with the OLT.

## Description

### BACKGROUND OF THE INVENTION

### Field of the Invention

The invention relates in general to an optical communication network, and more particularly to an optical communication network configuration method for creating a link between an optical network unit (ONU) and an optical line terminal (OLT).

### Description of the Related Art

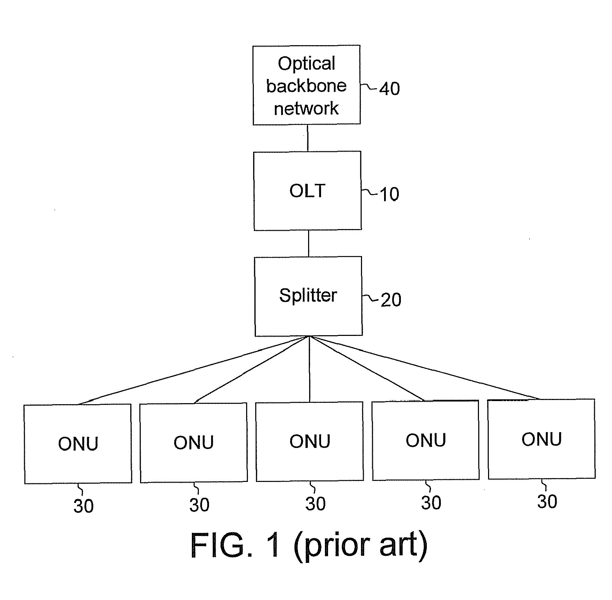

When used in long distance and large transmission volume, optical communication has better quality than conventional cable communication. The gigabyte-capable passive optical network (GPON) technology is the main stream technology used for implementing the fiber to the home (FTTH) service. Referring to FIG. 1, a system architecture of a GPON is shown. An optical line terminal (OLT) 10 is installed in the service provider's central office and connected with an optical backbone network 40. The OLT 10 can transmit optical signals to the splitter 20, which then transmits the optical signals to the optical network units (ONUs) 30 near end users. The splitter 20 also transmits the optical signals received from each ONU 30 to the OLT 10.

Due to the complexity of the GPON communication protocol, the standards of ITU-T G.988 series are not clear in some technical aspects. Therefore, each manufacturer may have its own interpretations regarding the requirements of the GPON communication protocol. As a result, an OLT may only be compatible with the ONUs manufactured by the same manufacturer and may not be compatible with the ONUs manufactured by other manufacturers. In other words, an ONU manufactured by one manufacturer may not be able to properly communicate with an OLT manufactured by another manufacturer.

### SUMMARY

One of the objectives of the invention is to provide an optical communication network configuration method allowing an ONU to be able to work with an OLT manufactured by a different manufacturer.

According to one embodiment of the present invention, an optical communication network configuration method for creating a link between an ONU and an OLT is provided. The configuration method comprises following steps. The ONU submits a universal management information base (universal MIB) to the OLT. The universal MIB is pre-stored in the ONU, and is compatible with various different OLT models. The ONU receives a set of configuration parameters from the OLT and recognizes the type of the OLT accordingly. The ONU selects a management information base (MIB) matching the OLT according to the recognized type of OLT. The ONU uses the MIB matching the OLT to create an ONU management and control interface (OMCI) with the OLT.

The above and other aspects of the invention will become better understood with regard to the following detailed description of the preferred but non-limiting embodiment(s). The following description is made with reference to the accompanying drawings.

### BRIEF DESCRIPTION OF THE DRAWINGS

FIG. 1 is a system architecture of a GPON.
FIG. 2 is an optical communication network configuration method according to an embodiment of the invention.

### DETAILED DESCRIPTION OF THE INVENTION

The OLT and the ONU which are manufactured by different manufacturers may be different in the supporting capacity of GPON. In the present embodiment, the connection between the ONU and the OLT is re-activated after the ONU recognizes the type of OLT. Knowing the type of the connected OLT, the ONU can create an ONU management and control interface (OMCI) to assure intercommunication between the ONU and the OLT.

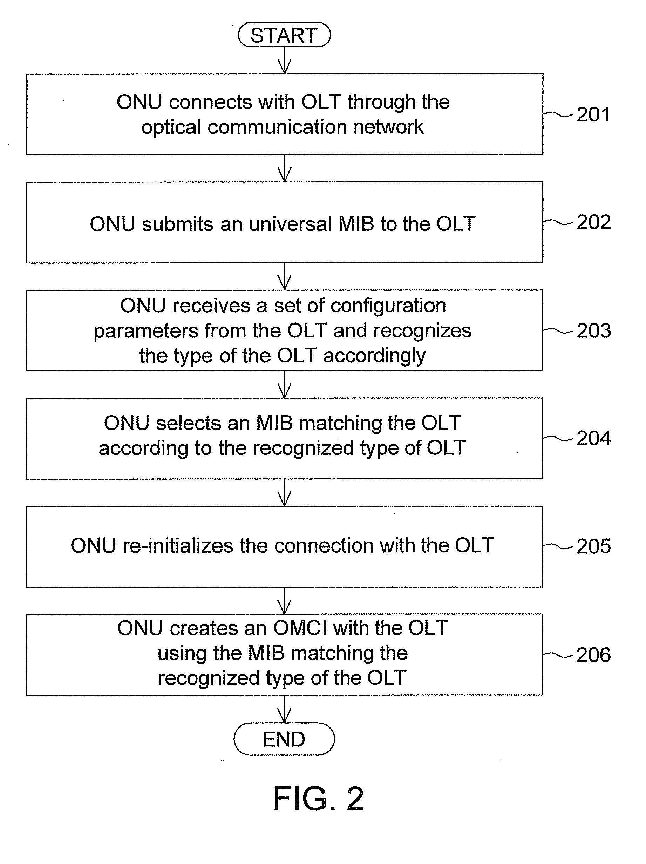

Referring to FIG. 2, an optical communication network configuration method according to an embodiment of the invention is shown. The configuration method comprises steps 201∼206.

In step 201, under an initial connection state, the power of the ONU is turned on for connecting the ONU with the OLT through the optical communication network, wherein the ONU is pre-stored with a universal MIB compatible with various different OLT models. These OLT models may be manufactured by different manufacturers. In step 202, the ONU submits the universal MIB to the OLT. Because the submitted in a universal MIB, it should be able to cause the OLT to follow up. If the OLT receives a non-universal MIB not compatible with itself, the OLT might not follow up with the ONU and might cause connection between the two to fail.

The MIB is a standard of data imported from a management entity (ME) through a network management protocol. The universal MIB is a minimum set or intersection (of set theory) of MIBs compatible with various OLT models manufactured by different manufacturers, such that the ONU can perform initial communication with the OLT manufactured by other manufacturers.

In step 203, the ONU receives a set of configuration parameters from the OLT and recognizes the type of the OLT accordingly. For example, the ONU may identify the manufacturer of the OLT based on the set of configuration parameters received from the OLT.

In step 204, the ONU selects a management information base (MIB) matching the OLT according to the recognized type of OLT. The ONU is pre-stored with multiple MIBs matching various different OLT models manufactured by different manufacturers. Based on the recognized type of OLT, the ONU should be able to select one MIB that is compatible with the OLT connecting with the ONU.

In step 205, the ONU re-initializes the connection with the OLT. In doing so, the ONU may re-initialize itself and update its configuration by adopting the MIB matching the OLT. In the present embodiment, the step of initializing the connection can be performed with or without rebooting the ONU. In the initialization step, the ONU may automatically disconnect from the optical communication network, adopt the MIB matching the OLT, and re-connect with the optical communication network. If the ONU does not reboot itself, waiting time can be reduced.

In step 206, the ONU uses the MIB matching the OLT to create an ONU management and control interface (OMCI) with the OLT such that the intercommunication between the ONU and the OLT can be implemented under the same OMCI protocol.

The optical communication network configuration method disclosed in above embodiment of the invention uses a universal MIB being a minimum set or intersection of different MIBs compatible with various types of OLTs manufactured by different manufacturers. The universal MIB enables the ONU to have an initial communication with the OLT, regardless of whether the ONU and OLT are manufactured by the same manufacturer. The initial communication gives the ONU an opportunity to receive the set of configuration parameters from the OLT and recognize the type of the OLT accordingly. The ONU can then select and adopt the MIB matching the recognized type of the OLT. Thus, intercommunication between the ONU and the OLT can be implemented, regardless of whether two are manufactured by the same manufacturer.

While the invention has been described by way of example and in terms of the preferred embodiment(s), it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. An optical communication network configuration method for creating a link between an optical network unit (ONU) and an optical line terminal (OLT), the configuration method being **characterized by** comprising the steps of:
the ONU submitting a universal management information base (universal MIB) to the OLT, wherein the universal MIB is pre-stored in the ONU and is compatible with various different OLT models;
the ONU receiving a set of configuration parameters from the OLT and recognizing the type of the OLT accordingly;
the ONU selecting a management information base (MIB) matching the OLT according to the recognized type of the OLT; and
the ONU using the MIB matching the OLT to create an ONU management and control interface (OMCI) with the OLT.

2. The configuration method according to claim 1, being **characterized in that**, the universal MIB is a minimum set of multiple MIBs, the MIBs are compatible with the various different OLT models, respectively.

3. The configuration method according to claim 1, being **characterized in that**, the universal MIB is an intersection of multiple MIBs, the MIBs are compatible with the various different OLT models, respectively.

4. The configuration method according to claim 1, being **characterized in that**, after receiving the set of configuration parameters from the OLT, the ONU re-initializes itself to update its configuration.

5. The configuration method according to claim 4, being **characterized in that**, the step of re-initializing the ONU comprises re-setting the ONU or re-connecting the ONU to the OLT.

6. The configuration method according to claim 1, being **characterized in that**, the ONU is pre-stored with multiple MIBs, the MIBs are compatible with the various different OLT models, respectively, and the ONU selects the MIB matching the OLT from the pre-stored MIBs according to the recognized type of the OLT.

7. The configuration method according to claim 1, being **characterized in that**, the various different OLT models are manufactured by various different manufacturers.
